# EUROPEAN PATENT APPLICATION

(11) **EP 4 276 004 A1**
(43) Date of publication of application: **15.11.2023**
(21) Application number: 23172300.8
(22) Date of filing: 09.05.2023
(51) Int. Cl.: B62M 25/04, B62K 23/02, B62K 23/06, B62L 3/02

(54) **MANUAL CONTROL DEVICE FOR A BICYCLE**

(30) Priority: 13.05.2022 IT 202200009923
(71) Applicant: Campagnolo S.r.l., 36100 Vicenza (VI) (IT)
(72) Inventor: SGREVA, Nicola, 36057 Arcugnano (VI) (IT); MARCHI, Marco, 40043 Marzabotto (BO) (IT)
(74) Representative: Riccardi, Elisa

(57) **Abstract**

Integrated control device (1) for curved bicycle handlebars, comprising:
- a support body (2) configured for attachment to the bicycle handlebars,
- a brake lever (5) for controlling the brake, and
- at least one control lever (10, 11) for issuing one or more commands to one or more pieces of bicycle equipment, having a control region (12, 13) arranged behind the brake lever (5) with respect to a travel direction (F), intended for applying thereto the pushing force with a finger other than the thumb,
wherein the control region (12, 13) has a peripheral portion (20, 30) forming a finger contacting surface, and a non-peripheral portion (21, 31) which is holed or recessed with respect to the peripheral portion (20, 30).

## Description

The invention relates to a manual control device for a bicycle, in particular a manual control device for curved handlebars, so called drop-bar. Term "manual" will be omitted hereinbelow for the sake of brevity.

Control devices are used to issue one or more commands to one or more mechanical and/or hydraulic and/or pneumatic and/or electromechanical and/or electro-electronic equipment of the bicycle, such as a brake associated with a wheel, a rear derailleur (sometimes just called gearshift) associated with the hub of the rear wheel, a front derailleur associated with the bottom bracket spindle (sometimes just called derailleur), a suspension, a saddle setting adjuster, a lighting system, a satellite navigator, a training device, an anti-theft device, a cycle computer capable of providing information on the status of the bicycle, the cyclist and/or the route, etc.

The known control devices for a bicycle comprise one or more manual actuation members supported by a support body suitable for attachment to the bicycle, in proximity or at a grip portion of the handlebars.

Some control devices comprise manual actuation members in charge of controlling a brake and the gear ratio, besides possibly one or more manual actuation members in charge of controlling other equipment. In the present description and the attached claims, under the expression "gear ratio" it is generally meant to encompass one or more of the following, unless otherwise indicated:
- the gear ratio between the bottom bracket spindle and a looped transmission element, in particular a chain or a belt,
- the gear ratio between the looped transmission element and the hub of the rear wheel,
- the overall gear ratio between the bottom bracket spindle and the hub of the rear wheel (controllable for example with some types of electronics).

In some cases, the controlled equipment directly responds to the manual force issued through the control device, such as for example in the case of mechanical brakes and gearshifts actuated through a Bowden cable or other sheathed cable; in other cases the manual force is amplified through the use of a hydraulic fluid, such as for example in the case of hydraulic brakes or hydraulic suspensions; in still other cases, an electric motor is used, such as for example in the case of electronic gearshifts, and the manual action is limited to control of an electric switch.

Control devices are also known, electronic or mechanical, for curved bicycle handlebars, comprising a support body configured for attachment to the bicycle handlebars, a brake lever for controlling the brake, articulated at an upper end thereof, the pivot axis of the brake lever being substantially horizontal and forward with respect to the handlebars in the travel direction, so that the brake lever is actuated by pulling it towards the curved end of the handlebars, and a pair of control levers, in charge of controlling a gear ratio, each control lever having a control region arranged behind the brake lever (with respect to the travel direction), intended for applying thereto the pushing force with one or more fingers other than the thumb; or wherein one gearshift lever is so configured and one gearshift lever is, conversely, arranged on the proximal face of the support body, intended for being actuated with the thumb.

In the present description and the attached claims, expression "control region" of a manual actuation member is used to indicate the portion of a manual actuation member onto which the cyclist applies a force, and expression "driven region" is used to indicate the portion of the manual actuation member which is moved when the cyclist applies the force to the control region. In the case of a manual actuation member of the lever type, the "control region" comprises the application point of the driving force, and the "driven region" comprises the application point of the resisting force.

In the present description and the attached claims, adjectives like "proximal", "distal", "upper", "lower", "right", "left" refer to the mounted condition of the control device on the bicycle. In particular, "proximal" is used to indicate closer to the center of the handlebars, facing the center of the handlebars, and the adjective "distal" is used to indicate farther from the center of the handlebars, facing away from the center of the handlebars.

The control regions of the control levers conventionally have a face intended for contacting the finger which is substantially planar - although not necessarily smooth nor flat strictly speaking, it possibly being knurled and/or concave - so that the entire face is undistinguishable by the feel. As a consequence, the cyclist's finger may rest in a not very mechanically convenient position, and actuation of the lever may be difficult; also, the finger can slip on the lever, especially when sweaty. When behind the brake lever there are two rather small and/or close control levers, it may not be very easy for the cyclist to distinguish them by the feel, entailing a risk of an involuntary actuation.

In the present description and in the attached claims, under "planar", a flat or almost flat surface is meant, wherein under "flat", a surface of uniform course, without hollows or reliefs is meant.

The technical problem at the basis of the invention is to improve the ergonomics of an integrated control device for curved bicycle handlebars.

The invention relates, in an aspect thereof, to a manual control device for curved bicycle handlebars, comprising:
- a support body configured for attachment to the bicycle handlebars,
- a brake lever for controlling the brake, articulated at an upper end thereof, the pivot axis of the brake lever being substantially horizontal and forward with respect to the handlebars in the travel direction in the mounted condition of the control device, so that the brake lever is actuated by pulling it towards the curved end of the handlebars, and
- at least one control lever, for issuing one or more commands to one or more pieces of bicycle equipment, having a control region arranged behind the brake lever with respect to the travel direction, intended for applying thereto the pushing force with a finger other than the thumb,
   wherein the control region has a peripheral portion forming a finger contacting surface, and a non-peripheral or generally central portion, which is holed or recessed with respect to the peripheral portion;
   whereby the non-peripheral portion exerts, in use, a lower counter-pressure, if any, with respect to the peripheral portion.

The non-peripheral portion, so configured, is easily identifiable with the finger, and it also exerts a containment action of the finger itself, preventing it from slipping. With such a configuration of the control region, the tactile feeling on the fingertip, that feels the greatest counter-pressure (or the only counter-pressure in the case of hole or very deep recess) at its periphery is, in a counterintuitive manner, opposed to that of a conventional lever, which has a substantially planar surface and thus generates a greater counter-pressure at the center of the fingertip; however exactly this uncommon feeling which leads the cyclist to correct position the finger, centered with respect to the non-peripheral portion.

Furthermore, the correct positioning of the finger, centered with respect to the non-peripheral portion, prevents the push movement on the control lever from being hindered by adjacent elements of the control device, and in particular prevents the simultaneous involuntary actuation of an adjacent control lever.

In order to issue the command, other conditions being equal - in particular, resisting force of the lever and position of the finger center of mass-, the pressure that has to be exerted with the finger may turn out to be slightly greater than that which has to be exerted with a conventional lever lacking the hole or recess (or depression); on the other hand this is minimized thanks to the predefined location of said hole or recess, and therefore of the finger center of mass, which allows the lever effect to be optimized.

Said at least one control lever may in particular be intended for controlling a gear ratio.

The non-peripheral portion may have a center of mass in an application point of the force maximizing the lever effect.

In the present description and in the attached claims, term "center of mass" referred to the holed non-peripheral portion is meant to indicate the center of mass that such a region would have in case it were not holed.

The non-peripheral portion may be off-centered in the respective control region, in particular towards the brake lever.

The non-peripheral portion may have an area in the direction orthogonal to the intended direction of the pushing force, namely on its distal face, comprised between about one third and about half of a fingertip of a finger of a hand for which the control device is sized.

For example the non-peripheral portion may have an area comprised within the range 30-90 mm^2, preferably within the range 40-80 mm^2, even more preferably within the range 50-70mm^2.

The non-peripheral portion may comprise a through hole.

The through hole may have a tapered peripheral edge, namely narrowing down from the face of the control lever intended to be pushed (distal face), towards the opposite face (proximal face) of the control lever.

The tapered peripheral edge generates a more pleasant tactile feeling, and also aids the withdrawal from the mould, in the case of control levers made by moulding.

Alternatively, the non-peripheral portion may comprise a recess or depression.

The recess or depression may have a tapered peripheral edge, namely narrowing down from the face of the control lever intended to be pushed (distal face), towards the opposite face (proximal face) of the lever, on which the bottom of the depression lies, for similar reasons to those stated with reference to the through hole.

The recess may have such a depth that, in the use of the manual control device, the fingertip grazes or fails to touch the bottom of the recess, without exerting the pushing force thereonto.

The recess has, for example, a depth of at least 1 mm, preferably of at least 1.5 mm, even more preferably of at least 2.5 mm.

The peripheral edge of the non-peripheral portion may follow the peripheral edge of the control region, at a preferably non-constant distance from the peripheral edge of the control region, namely it may have a geometrically similar shape, but preferably be not centered with respect to the control region.

In the present description and in the attached claims, under "geometric similarity" and derived forms, a transformation of the plane into itself or of the space into itself which associates, to each pair of points A, B, two points A', B' such that the length ratio of segments A'B' and AB has a constant value k.

The non-peripheral portion may have a peripheral edge having a generally quadrangular shape, preferably with rounded edges.

The peripheral edge of the non-peripheral portion may be generally shaped like a rectangular trapezium.

At least one zone of the peripheral portion of the control region may be texturized, namely it may have a first set of narrow, substantially parallel and close together grooves, and optionally a second set of narrow, substantially parallel and close together grooves, preferably substantially orthogonal to the grooves of the first set.

The peripheral portion of the control region may have at least one guide zone of the finger towards the non-peripheral portion.

The or each guide zone may comprise a channel extending in the direction from the peripheral edge of the control region to the peripheral edge of the non-peripheral portion, preferably extending from the peripheral edge of the control region to the peripheral edge of the non-peripheral portion.

The guide zone may extend below the non-peripheral portion. A so located guide zone or channel is particularly effective for a support body grip by the cyclist.

The guide zone may extend behind the non-peripheral portion, in the travel direction. A so located guide zone or channel is particularly effective for a handlebars grip by the cyclist.

The channel may have an increasing width, for example up to be substantially as large as a side of the peripheral edge of the non-peripheral portion until which it extends. An increasing width aids in guiding the finger in the correct direction along the guide channel.

The guide channel may have a depth equal to 30%, preferably to 20%, more preferably to 15%, of the depth of the hole or recess.

The guide channel may have a depth comprised within the range 0.5-1 mm, preferably within the range 0.4-0.8 mm, more preferably within the range 0.3-0.6 mm.

There may be two guide zones, channels of the two regions extending along substantially orthogonal directions.

Said at least one control lever may comprise a pair of control levers.

The non-peripheral portion of the control levers of the pair may be different.

For example, one of the control levers of the pair may be provided with a holed non-peripheral portion and the other one of the control levers of the pair may be provided with a recessed non-peripheral portion; as another example, the non-peripheral portions may differ in one or more among shape, size, depth (if recessed), location within the control region, etc.

The peripheral portion of the control levers of the pair may be different.

For example, one of the control levers of the pair may comprise said at least one textured zone, and the other one may be provided with said one or more guide zones. However, one of the control levers (or both) might comprise both said at least one textured zone and said one or more guide zones.

In case both the control levers of the pair comprise said at least one textured zone, the texture may be made different for example in number of regions and/or location, extent, surface conformation of the zones; in the case wherein both control levers of the pair comprise said at least one guide zone, they may be made different for example in number, location, extent, direction of the guide zone(s).

The control regions of the pair of control levers may be arranged one above the other.

Each control lever is therefore rearward with respect to the brake lever in the travel direction.

With this arrangement, the control lever having the upper control region may be intended for applying thereto the manual force for example with a forefinger, and the control lever having the lower control region may be intended for applying thereto the manual force for example with a middle finger. The cyclist finger may "specialize" and an involuntary actuation is further avoided.

The control lever having the upper control region may be provided with the textured zone, and the control lever having the lower control region may be provided with said one or more guide regions, or vice versa.

In case the bicycle equipment comprises a derailleur, the control lever having the upper control region may be intended for example for emitting an upshift command, and the control lever having the lower control region may be intended for emitting a downshift command.

The control regions of the pair of control levers may be separated by a slit.

In this configuration, the distance of the two non-peripheral portions from the slit may be substantially the same.

The two non-peripheral portions may be off-centered in the respective control region towards the slit.

The brake lever may have a distal face having a rear edge and a longitudinal direction defined by a line tangent to the rear edge and intersecting the pivot axis. The slit may extend slanted upwards along a direction forming an angle comprised between 30° and 90° with the longitudinal direction of the brake lever, preferably an angle comprised between 35° and 85°, more preferably an angle comprised between 40° and 80°. That provision allows somebody who has small hands to act on the top portion of the control lever having the lower control region, thus increasing the actuation comfort and the grip on the control device.

The peripheral portion of the control region of the or each control lever may extend on a surface that, at the rear edge of the brake lever, is tangent to the distal face of the brake lever.

When the control levers are two, the two peripheral portions of the two control regions may extend on a same plane or on a curved surface having a constant or uniformly variable radius of curvature. In this way, between the two peripheral portions of the two control regions there is no sharp transition.

The or each control lever may be articulated about an axis substantially orthogonal to the articulation axis of the brake lever.

The or each control lever may be articulated at an upper end thereof.

The or each control lever may be movable between a rest position behind the brake lever and an actuation position proximal with respect to the rest position.

The or each control lever may be articulated on the brake lever or on the support body; in the case of two levers, one may be articulated on the brake lever (for example the lower one) and the other one (for example the upper one) on the support body.

The or each control lever may control an electric switch.

Each electric switch may be housed on the support body, a motion transmission device from a driven region of the respective control lever to the electric switch being provided for.

Alternatively, the or each control lever may control an equipment through a mechanical member, in particular an inextensible sheathed cable.

Further features and advantages of the invention will be better highlighted by the description of preferred embodiments thereof, made with reference to the attached drawings, wherein:
- FIG. 1 shows a control device, in a view from a distal side thereof,
- FIG. 2 is a detail of the control device of FIG. 1,
- FIGs. 3-7 show sections along planes III-III, IV-IV, V-V, VI-VI, VII-VII of FIG. 2, respectively,
- FIGs. 8-9 illustrate the use of the control device of FIG. 1 in two different bicycle driving positions,
- FIGs. 10-11 illustrate the use of the control device of FIG. 1 in temporary positions of the finger in the two bicycle driving positions of FIGs. 8-9,
- FIG. 12 is a view corresponding to the view of FIG. 2, with a different control device, and
- FIGs. 13-15 show sections along planes XIII-XIII, XIV-XIV, XV-XV of FIG. 12, respectively.

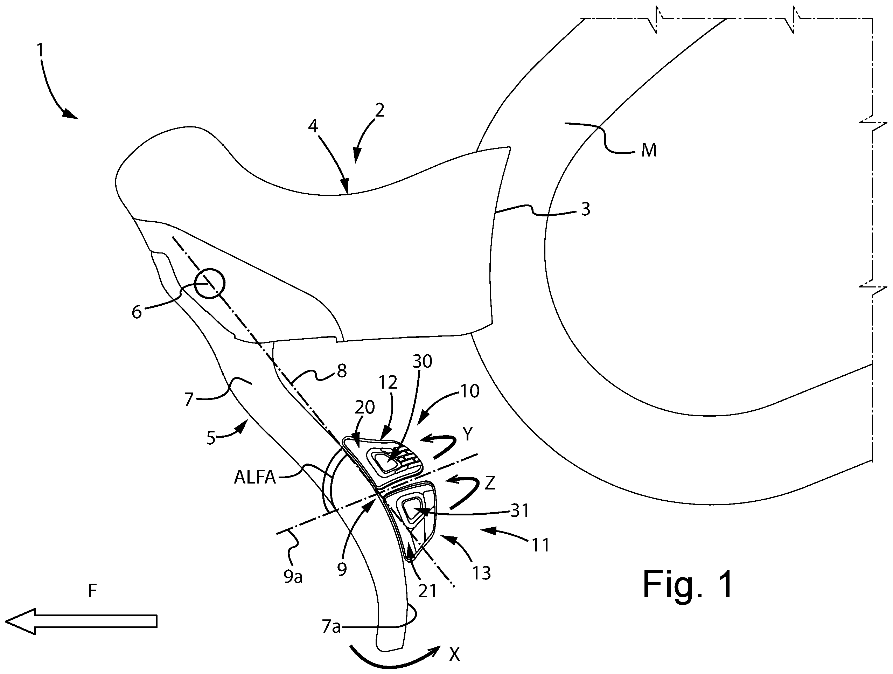

In **FIG. 1** there is shown a control device 1 for curved handlebars, so called of the "drop-bar" type or for racing bicycles, according to a merely illustrative and not limiting embodiment of the invention, mounted on handlebar M.

In the case shown, it is a left control device, a right control device being the mirror image thereof.

The control device 1 comprises a support body 2, configured for attachment to the bicycle handlebars M. The support body 2 is attached at its rear region 3, so as to protrude forward in the travel direction from the convex grip region of the handlebars M, in a manner per se well known. The support body 2 may also be gripped by the cyclist instead of the handlebars M, resting his/her hand palm on its upper region 4.

The control device 1 shown is in charge of controlling a brake and of emitting one or more commands to one or more pieces of bicycle equipment, not necessarily to a derailleur. However, it may be in charge of controlling the brake and the gear ratio, and reference will be made hereinafter to this specific example, merely by way of not limiting example.

The control device 1 may comprise, as shown, a manual actuation member in the form of a brake lever 5, for controlling the brake, articulated at an upper end thereof, the pivot axis 6 of the brake lever 5 being substantially horizontal and forward with respect to the handlebars M in the travel direction F, so that the brake lever 5 is actuated by pulling it towards the curved end of the handlebars M, namely generally toward the rear region 3 of the support body 2, as shown by arrow X.

The control device 1 may comprise, as shown, a pair of manual actuation members in the form of control levers 10, 11 in charge of controlling for example the gear ratio, preferably, in the case of the left control device shown, for controlling the gear ratio between the bottom bracket spindle and a looped transmission member, in particular a chain or a belt.

The control levers 10, 11 are articulated, for example, at an upper end thereof, in a manner not visible because it is unimportant to the end of the subject-matter disclosed herein.

Each control lever 10, 11 may be articulated on the brake lever 5 or on the support body 2; in the case shown of two control levers 10, 11, one may be articulated on the brake lever 5 (for example the lower lever 11) and the other one (for example the upper control lever 10) on the support body 2.

The control levers 10, 11 have a respective control region 12, 13, intended for applying the manual force, namely the pushing force with a finger, on their distal face (that visible in FIG. 1).

The control region 12, 13 is arranged behind the brake lever 5, namely rearward with respect to the brake lever 5 in the travel direction F.

The control regions 12, 13 may be separated by a slit 9, as shown.

The slit 9 may extend, slanted upwards, substantially along a direction 9a forming an angle ALFA comprised between 30° and 90° with the longitudinal direction 8 of the brake lever 5, preferably an angle comprised between 35° and 85°, more preferably an angle comprised between 40° and 80°. In this manner, even somebody having small hands may comfortably act onto the upper portion of the control lever 11, having the lower control region 13, with a good grip on the control device 1.

The longitudinal direction 8 of the brake lever 5 is defined by a line tangent to the rear edge 7a of a distal face 7 of the brake lever 5 and intersecting the pivot axis 6 of the brake lever 5.

The control levers 10, 11 are actuated, for example, by pushing them in a generally distal-to-proximal direction (toward the drawing plane in FIG. 1), as shown by arrows Y, Z (direction of the pushing force or briefly push direction). In this case, the control levers 10, 11 are movable between a rest position behind the brake lever 5, namely moved back with respect to the brake lever 5 in the travel direction F, and an actuation position proximal with respect to the rest position.

In the case of electronic control device 1, for controlling an electric-electronic derailleur or other equipment, the control levers 10, 11 control the closure of a respective switch, directly with a driven region thereof (not visible in the figures) or through motion transmission devices interposed between the driven region of the control levers 10, 11 and the switches.

In other cases, the control levers 10, 11 are provided for issuing one or more commands to one or more mechanical and/or hydraulic and/or pneumatic and/or electromechanical pieces of equipment - in particular derailleurs-, and for example they may control the traction of sheathed cables, the push of pistons or something else.

The control device 1 may also comprise other manual actuation members, not shown, in charge of issuing for example commands to electronics of a controlled equipment, in particular to the electronics of the front derailleur in the case of the left control device shown, of the rear derailleur in the case of the right control device.

The possible switches controlled by the manual actuation members 10, 11 may be housed within a cavity of the support body 2 or on the brake lever 5.

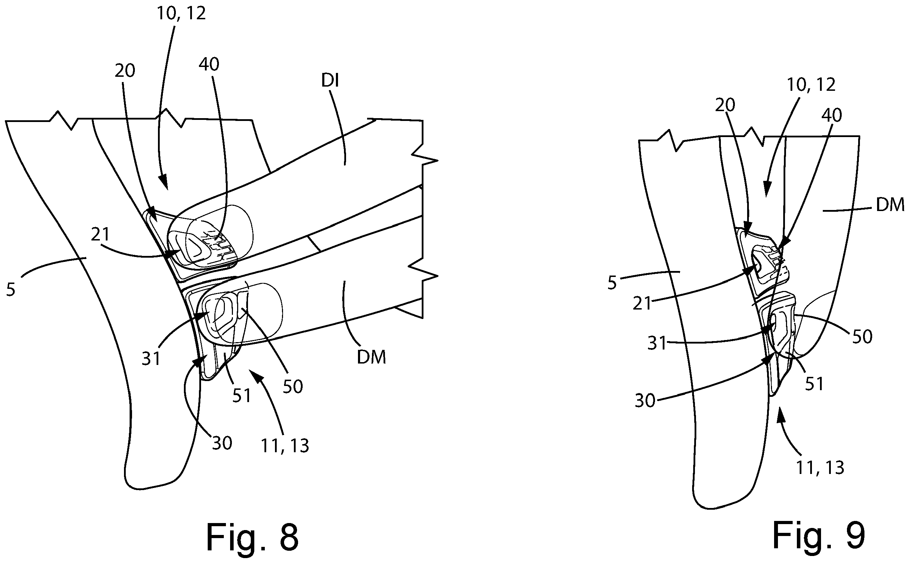

The control regions 12, 13 of the control levers 10, 11 may be arranged one above the other as shown. For example, the control lever 10 having the upper control region 12 is intended for applying thereto the manual force with a forefinger DI, and the control lever 11 having the lower control region 13 is intended for applying thereto the manual force with a middle finger DM (cf. FIGs. 8, 9). For example, the control lever 10 having the upper control region 12 is intended for emitting an upshift command, and the control lever 11 having the lower control region 13 is intended for emitting a downshift command. The cyclist's finger may therefore "specialize" and an involuntary actuation is avoided.

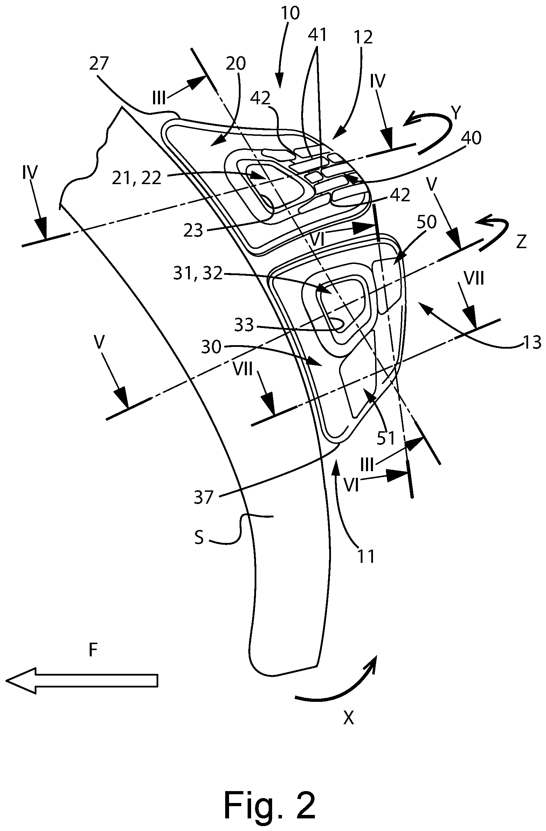

With reference also to **FIGs. 2-11****,** in each control lever 10, 11, the control region 12, 13 has, in particular is formed by, a peripheral (or "external") portion 20, 30 and a non-peripheral or generally central (or "inner") portion 21, 31. The two portions 20, 21; 30, 31 are therefore complementary.

The peripheral portions 20, 30 of the control regions 12, 13 may extend on a same plane as shown, or on a curved surface having a constant or uniformly variable radius of curvature, so that between the peripheral portions 20, 30 of the two control regions 12, 13 (at the slit 9) there is no sharp transition. However, this is not strictly necessary.

The peripheral portions 20, 30 of the control regions 12, 13 may extend on surfaces that, at the rear edge 7a of the brake lever 5, are tangent to the distal face 7 of the brake lever 5. However, this is not strictly necessary.

The peripheral portions 20, 30 of the control regions 12, 13 preferably start both from the rear edge 7a of the distal face 7 of the brake lever 5; alternatively they might be one behind the other one or have other mutual arrangements. For example, either one might be L- or C-shaped and partly surround the other one.

The two non-peripheral portions 21, 31 may have their center of mass in an application point of the force which maximizes the lever effect.

The two non-peripheral portions 21, 31 may be off-centered in the respective control region 12, 13, in particular towards the brake lever 5.

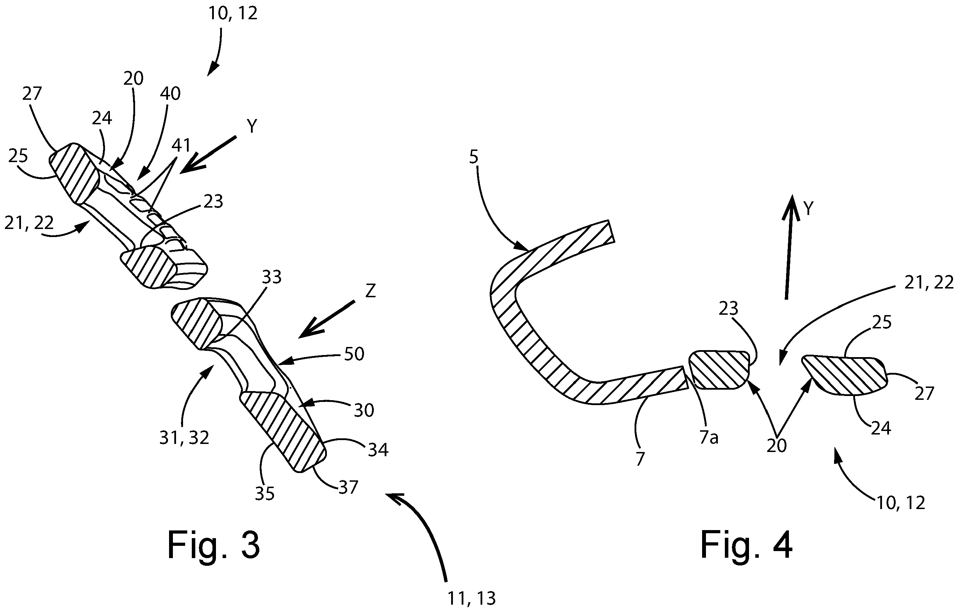

With reference in particular to the cross-sectional views of FIGs. 3-5, the non-peripheral portion 21, 31 is holed. For example, the non-peripheral portion 21, 31 comprises, in particular is comprised of, a through hole 22, 32.

The through hole 22, 32 may have a tapered peripheral edge 23, 33, mainly narrowing down from the face 24, 34 of the control lever 10, 11 intended to be pushed - the distal face 24, 34 - towards the opposed face (the proximal face 25, 35) of the control lever 10, 11. The tapered peripheral edge 23, 33 generates a more pleasant tactile feeling, and also aids withdrawal from the mould, in the case of control levers made by moulding.

With reference in particular to FIGs. 8 and 9, the peripheral portion 20, 30 forms a finger contacting surface. Thanks to the hole configuration 22, 32 of the non-peripheral portion 21, 31, the non-peripheral portion 21, 31 does not exert, in use, any counter-pressure on the cyclist finger. The non-peripheral portion 21, 31 partially accommodates, in use, the central region of the fingertip of the finger DI, DM.

The non-peripheral portion 21, 31 is easily identifiable with the finger, and it also exerts a containment action of the finger itself, preventing it from slipping (or at least hindering its slipping). The tactile feeling on the fingertip, which only feels the counter-pressure at its periphery, is, in a counter-intuitive manner, opposed to that of a conventional lever, which has a substantially planar surface and thus generates a greater counter-pressure at the center of the fingertip; however exactly this unusual feeling leads the cyclist to correctly position the finger, centered with respect to the non-peripheral portion 21, 31.

Furthermore, the correct positioning of the finger DI, DM, centered with respect to the non-peripheral portion 21, 31, prevents the push movement onto the control region 12, 13 from being hindered by adjacent elements of the control device 2, and in particular prevents the involuntary simultaneous activation of an adjacent lever, such as the brake lever 5 or the other control lever 11, 10.

The non-peripheral portion 21, 31 may have an area in the crosswise direction to the intended direction Y, Z of the push action, namely on its distal face 24, 34, comprised between about one third and about half of a fingertip of a finger DI, DM of a hand for which the control device 1 is sized. Those skilled in the art will understand that the control device 1 is sized with reference to a hand of an average or reference size (for example it may be manufactured in versions for men, women and children), and it is to such an average sized hand that the size of the non-peripheral portion 21, 31 is referred.

For example the non-peripheral portion 21, 31 may have an area comprised within the range 30-90mm^2, preferably within the range 40-80mm^2, even more preferably within the range 50-70 mm^2.

The peripheral edge 23, 33 of the non-peripheral portion 21, 31 may follow the peripheral edge 27, 37 of the control region 12, 13, at a distance that may be non-constant from the peripheral edge 27, 37 of the control region 12, 13. In other words, the non-peripheral portion 21, 31 and the control region 12, 13 may have a geometrically similar shape; the non-peripheral portion 21, 31 may be not centered with respect to the control region 12, 13.

The non-peripheral portion 21, 31 may have a peripheral edge 23, 33 of a generally quadrangular shape, preferably with rounded edges.

The peripheral edge 23, 33 of the non-peripheral portion 21, 31 may be generally shaped like a rectangular trapezium.

In the case of two control levers 10, 11 arranged behind the brake lever 5, one above the other and spaced by the slit 9 as shown, the base of the rectangular trapezium may extend substantially parallel to the slit 9.

The distance of the two non-peripheral portions 21, 31 from the slit 9 may be substantially the same.

The two non-peripheral portions 21, 31 may be off-centered in the respective control region 12, 13 towards the slit 9.

The two non-peripheral portions 21, 31 configured as a through hole 22, 32 of the two control levers 10, 11 may differ from each other in one or more of shape, size, location within the control region, etc.

The control regions 12, 13 may have a different surface texture, so as to allow them to be distinguished by the feel.

One of the control regions 12, 13, the upper control region 12 in the case shown, may have at least one textured zone 40 of the peripheral portion 20, only one being shown in the figures merely by way of non-limiting example. With the reference also to FIG. 3, the textured zone 40 has a first set of narrow, substantially parallel and closely spaced grooves 41, and optionally a second set of narrow, substantially parallel and closely spaced grooves 42, substantially orthogonal to the grooves 41 of the first set in the case shown, but which could also form angles different from 90° therewith.

The textured zone 40 of the peripheral portion 20 preferably extends from the peripheral edge 27 of the control region 12 to the peripheral edge 23 of the non-peripheral portion 21.

The textured zone 40 of the peripheral portion 20 preferably extends from one side only of the peripheral edge 27 of the control region 12 to the peripheral edge 23 of the non-peripheral portion 21, in case they have a substantially quadrangular shape as shown.

The textured zone 40 of the peripheral portion 20 preferably lies behind, with respect to the travel direction F, the non-peripheral portion 21. In this manner it lies between the curved portion of the handlebars M and the non-peripheral portion 21, and therefore it is particularly felt by the finger when the cyclist grips the curved portion of the handlebars M and extends his/her finger DI too little.

The grooves 41, 42 may extend substantially parallel to respective sides of the peripheral edge 23 of the non-peripheral portion 21 as shown, but this is not necessary and they might also be slanted.

It is noted that more than one textured zone 40 may be provided for. Also the location and/or the extent of the textured zone 40 may be different from what is shown, as well as the particular texture shown is merely illustrative and not limiting.

One of the control regions 12, 13, the lower control region 13 in the case shown, may have at least one zone of its peripheral portion 30 for guiding the finger towards the non-peripheral portion 31; in the case shown it has two guide zones 50, 51.

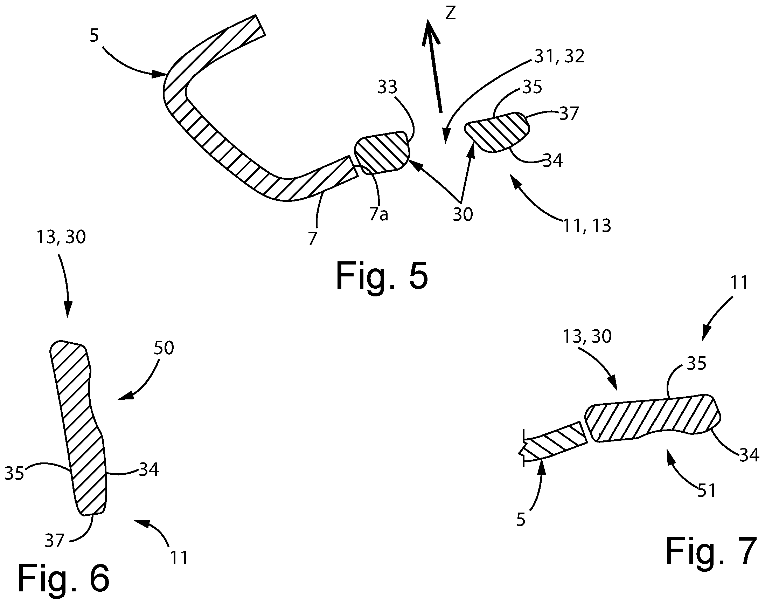

With reference also to FIGs. 6 e 7, each guide zone 50, 51 may comprise a channel extending in the direction from the peripheral edge 37 of the control region 13 to the peripheral edge 33 of the non-peripheral portion 31, namely in the direction orthogonal to the section plane of those figures, and preferably from one to the other of those peripheral edges 37, 33.

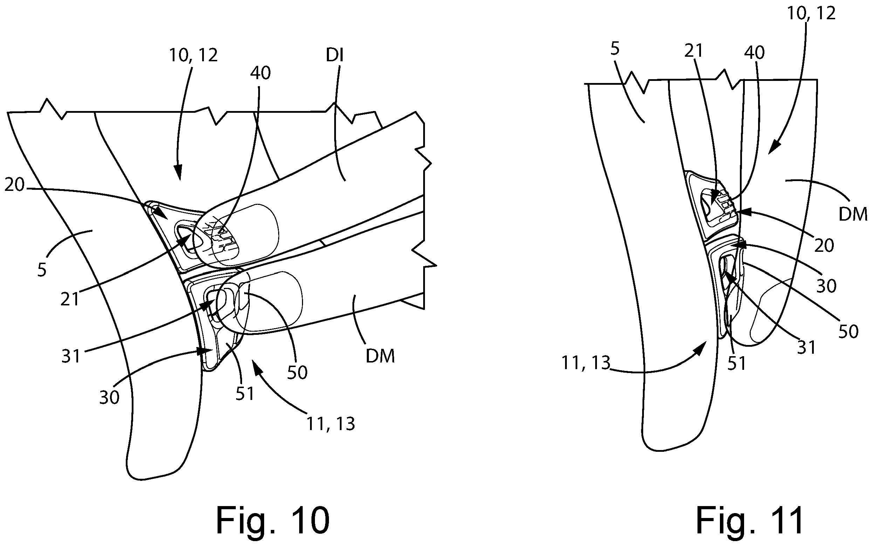

In the case shown, the guide zone 50 or guide channel 50 extends behind the non-peripheral portion 31, in the travel direction F. A so located channel is particularly efficient for a grip of the handlebars M by the cyclist, as may be seen in particular in FIG. 10: feeling the guide channel 50 with the middle finger DM (or another finger), the cyclist is led to slide the finger forward along the guide channel 50 itself, thus bringing it at the non-peripheral portion 31, in the position of FIG. 8, corresponding to the optimal position from the point of view of the lever effect. It is noted that, if the cyclist slid his/her finger in the opposite direction by mistake, backwards, he/she would reach the end of the control lever 11, immediately realizing the mistake.

In the case shown, the guide zone 51 or guide channel 51 extends below the non-peripheral portion 31, so as to be particularly effective for a grip of the support body 2 by the cyclist, as may be seen in particular in FIG. 11: by feeling the guide channel 51 with the middle finger DM (or other finger), the cyclist is led to slide the finger upwards along the guide channel 51 itself, thus bringing it at the non-peripheral portion 31, in the position of FIG. 9, corresponding to the optimal position from the point of view of the lever effect. It is noted that, should the cyclist slide the finger in the opposite direction by mistake, downwards, he/she would arrive at the end of the control lever 11 immediately realizing the mistake.

In the case shown, the two guide channels 50, 51 therefore extend along orthogonal directions, but this is not strictly necessary.

Each guide channel 50, 51 may have, as in the case shown, an increasing width, for example up to be substantially as large as a side of the peripheral edge 33 of the non-peripheral portion 31 until which it extends, but this is not strictly necessary. An increasing width aids in guiding the finger in the correct direction along the guide channel 50, 51.

Each guide channel may have a depth equal to 30%, preferably to 20%, more preferably to 15%, of the depth of the through hole 22, 32.

Each guide channel may have a depth comprised within the range 0.5-1 mm, preferably within the range 0.4-0.8 mm, more preferably within the range 0.3-0.6 mm.

It is noted that more than two guide channels 50, 51 may be provided for, or vice versa just one. Also the direction of the or each guide channel 50, 51 may be different from what is shown. For example, one or more guide channels may be oriented so as to extend towards, or up to a corner of, the peripheral edge 33 of the non-peripheral portion 31.

It is noted that at least one textured zone may be provided for on the lower control lever 11 and/or at least one guide channel may be provided for on the upper control lever 10.

It is also possible to provide for guide channels on both control levers 10, 11.

It is also possible to provide for one or more textured zones on both control levers 10, 11.

Preferably, the peripheral portion 20, 30 of the control levers 10, 11 is made different, by varying its texture and/or the location and/or extent and/or number and/or other features of the textured zone(s) and/or of the guide zone(s), so as to aid distinguishing the control levers 10, 11 by the cyclist.

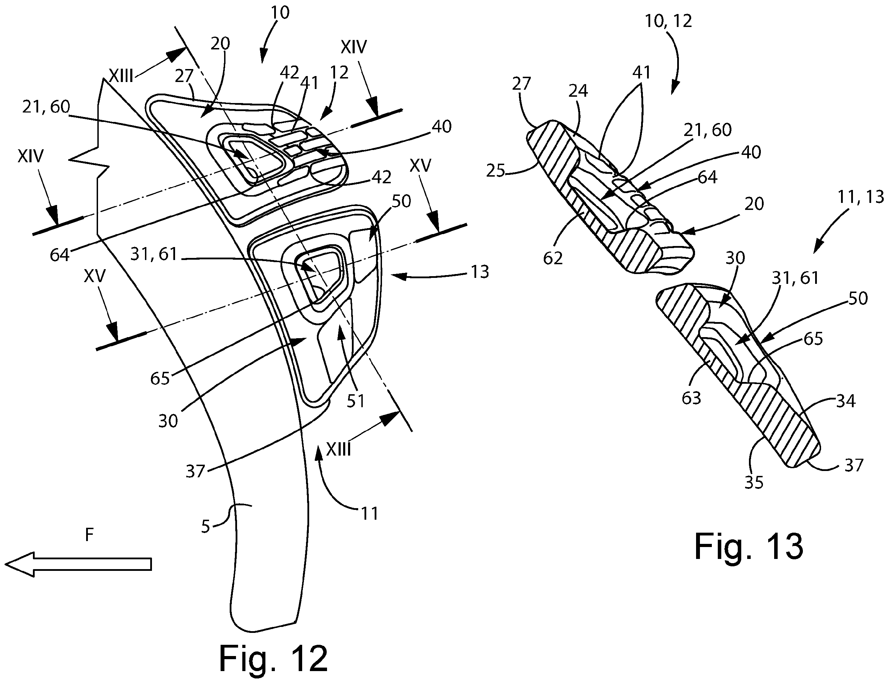

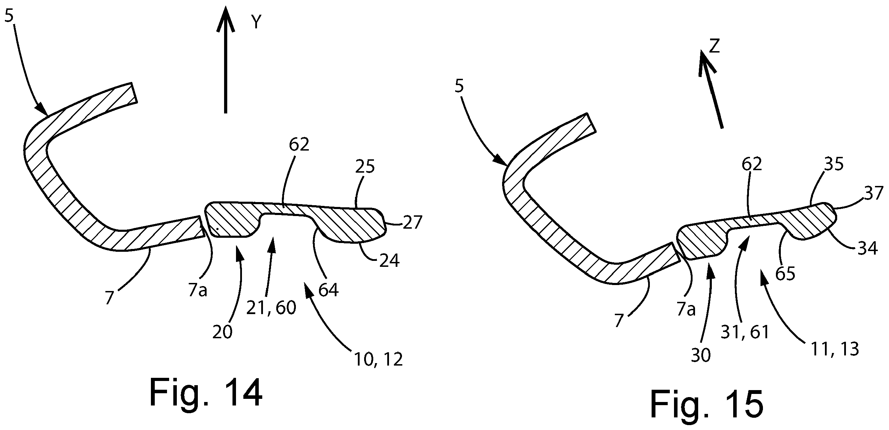

With reference to **FIGs. 12-15****,** one of the non-peripheral portions 21, 31 of the control levers 10, 11 - both in the case shown merely by way of example - may comprise, instead of a through hole, a recess 60, 61 or depression.

The bottom 62, 63 of the recess 60, 61 may extend on the proximal face 25, 35 of the control region 12, 13 as shown.

The peripheral edge 64, 65 of the recess 60, 61 may be tapered analogously to the through hole 22, 32.

Each recess 60, 61 may have such a depth that the fingertip grazes or fails to touch the bottom 62, 63, without exerting the pushing force thereonto.

The recess 60, 61 has, for example, a depth of at least 1 mm, preferably of at least 1.5 mm, even more preferably of at least 2.5 mm.

Also a non-peripheral portion 21, 31 recessed with respect to the peripheral portion 20, 30 is well identifiable with the finger and also exerts a containment action of the finger itself, preventing it from slipping (or at least hinders slipping thereof). A recessed non-peripheral portion 21, 31 confers a tactile feeling analogous to that described above with reference to the through hole 22, 32, leading the cyclist to the correct positioning of the finger, centered with respect to the non-peripheral portion 21, 31. When it is correctly positioned there, the cyclist's finger is not hindered by other adjacent elements of the control device 2, and it does not involuntarily actuates the adjacent lever(s), as described with reference to the through hole 22, 32.

Furthermore, all of the considerations, variants, changes, additions, absence of elements and features described above with reference to the through hole 22, 32 apply.

One of the control levers 10, 11 may have a holed non-peripheral portion 21, 31 and the other one of the control levers 10, 11 may have a recessed non-peripheral portion 21, 31.

It is once more emphasized that the control regions 12, 13 of the control levers 10, 11 provided behind the brake lever 5 may have configurations and/or positions even remarkably different from what has been shown.

There may also be only one of the control levers 10, 11, for example another control lever being provided for on the proximal face (not visible) of the support body 2, intended for actuation with the thumb.

The various alternative embodiments, variants and/or possibilities of each component or group of components that have been described are to be meant as combinable with each other in any manner, unless they are mutually incompatible.

The above is a description of various embodiments, variants and/or possibilities of inventive aspects, and further changes can be made without departing from the scope of the present invention. The shape and/or size and/or location and/or orientation of the various components and/or the succession of the various steps can be changed. The functions of an element or module can be carried out by two or more components or modules, and vice-versa. Components shown directly connected to or contacting each other can have intermediate structures arranged in between them. Steps shown directly following each other can have intermediate steps carried out between them. The details shown in a figure and/or described with reference to a figure or to an embodiment can apply in other figures or embodiments. Not all of the details shown in a figure or described in a same context must necessarily be present in a same embodiment. Features or aspects that turn out to be innovative with respect to the prior art, alone or in combination with other features, should be deemed to be described per se, irrespective of what is explicitly described as innovative.

## Claims

1. Control device (1) for curved bicycle handlebars, of the drop-bar type, comprising:
- a support body (2) configured for attachment to the bicycle handlebars,
- a brake lever (5) for controlling the brake, and
- at least one control lever (10, 11), for issuing one or more commands to one or more pieces of bicycle equipment, having a control region (12, 13) arranged behind the brake lever (5) with respect to a travel direction (F), intended for applying thereto the pushing force with a finger other than the thumb,
**characterized in that** the control region (12, 13) has a peripheral portion (20, 30) forming a finger contacting surface, and a non-peripheral portion (21, 31) which is holed or recessed with respect to the peripheral portion (20, 30).

2. Manual control device (1) according to claim 1, wherein the non-peripheral portion (21, 31) comprises a through hole (22, 32) having a tapered peripheral edge (23, 33).

3. Manual control device (1) according to claim 1, wherein the non-peripheral portion (21, 31) comprises a recess (60, 61) having a tapered peripheral edge (64, 65).

4. Manual control device (1) according to claim 3, wherein the recess (60, 61) has such a depth that the fingertip grazes or fails to touch a bottom (62, 63) of the recess (60, 61), thus without exerting any pushing force thereon.

5. Manual control device (1) according to any of the previous claims, wherein at least one zone (40) of the peripheral portion (20) of the control region (12) is textured.

6. Manual control device (1) according to any of the previous claims, wherein the peripheral portion (30) of the control region (13) has at least one guide zone (50, 51) of the finger towards the non-peripheral portion (31).

7. Manual control device (1) according to claim 6, wherein said at least one guide zone (50, 51) comprises a channel extending from the peripheral edge (37) of the control region (13) to the peripheral edge (33) of the non-peripheral portion (31).

8. Manual control device (1) according to claim 6 or 7, wherein said at least one guide zone (50, 51) extends below and/or behind the non-peripheral portion (31).

9. Manual control device (1) according to any of the previous claims, wherein said at least one control lever (10, 11) comprises a pair of control levers (10, 11).

10. Manual control device (1) according to claim 9, wherein the non-peripheral portion (21, 31) of the control levers (10, 11) of the pair is different.

11. Manual control device (1) according to claim 9 or 10, wherein the peripheral portion (20, 30) of the control levers (10, 11) of the pair is different.

12. Manual control device (1) according to claim 11, wherein at least one zone (40) of the peripheral portion (20) of the control region (12) of one of the control levers (10, 11) of the pair is textured, and the peripheral portion (30) of the control region (13) of the other one of the control levers (10, 11) of the pair has at least one guide zone (50, 51) of the finger towards the non-peripheral portion (31).

13. Manual control device (1) according to any of claims 9-12, wherein the control regions (12, 13) of the control levers (10, 11) are arranged one above the other.

14. Manual control device (1) according to any of claims 9-13, wherein the control regions (12, 13) of the pair of control levers (10, 11) are separated by a slit (9), wherein preferably the distance of the two non-peripheral portions (21, 31) from the slit (9) is substantially the same and/or the two non-peripheral portions (21, 31) are off-centered in the respective control region (12, 13) towards the slit (9).

15. Manual control device (1) according to claim 14, wherein the slit (9) extends slanted upwards along a direction forming an angle (ALFA) comprised between 30° and 90° with the longitudinal direction (8) of the brake lever (5), preferably an angle comprised between 35° and 85°, more preferably an angle comprised between 40° and 80°.
